# EUROPEAN PATENT SPECIFICATION

(11) **EP 1 520 777 B1**
(45) Date of publication and mention of the grant of the patent: **15.11.2006**
(21) Application number: 04022685.4
(22) Date of filing: 23.09.2004
(51) Int. Cl.: B62M 25/08

(54) **Electronic control device for bicycle**
Elektronisch gesteuerte Getriebeschalteinrichtung für Fahrrad
Actionneur pour transmission de bicyclette commandé électroniquement

(30) Priority: 30.09.2003 JP 2003339924
(43) Date of publication of application: 06.04.2005
(73) Proprietor: SHIMANO INC., Osaka 590-8577 (JP)
(72) Inventor: Uno, Koji, Naniwa Osaka (JP)
(74) Representative: Grosse, Wolfgang

(56) References cited:
- EP-A- 1 231 623
- EP-A- 1 424 276
- WO-A-88/01962
- JP-Y- 7 037 642
- US-A- 5 356 348

## Description

### BACKGROUND OF THE INVENTION

### Detailed Description of the Invention

The present invention relates to an electronic control device for bicycle, and particularly to a bicycle electronic control device for electronically controlling on-board control-targeted equipment on the bicycle.

### Background Art

In recent years, bicycles equipped with electronic control devices incorporating microcomputer chips or the like have become available. For example, electronic control devices known to date include devices for controlling the shifter in order to shift automatically depending on gear speed, and devices for controlling a display device in order to display velocity, trip distance, or the like.

Certain such electronic control devices known to date are supplied with power by being connected, by means of a connector, to a battery or other power supply (e.g. Japanese Utility Model H7 -37642). Typically, the microcomputer sometimes experiences system error --due to noise or other disturbance, or to a program bug-- which can result in the system entering an unintended routine and in loss of control, for example.

Accordingly, electronic control devices to date are provided with a reset switch; in the event of a system error, the reset switch can be pressed to reset the microcomputer. The reset switch employed in a conventional electronic control device is a contact switch having an operating member that moves. The reset switch is operated with the fingertip. Operating the reset switch sends a reset signal to the reset terminal of the microcomputer.

The document EP 1 424 276 A2 (date of publication 2.6.2004) shows an electronic control unit for a bicycle with a power switch, which operates as a reset trigger.

### Disclosure of the Invention

Since a bicycle is commonly ridden or stored outdoors, foreign matter, e.g. solid material such as mud or pitch from the road, or liquids such as rain water, tends to become deposited on it. For example, an electronic control device, such as a cycle computer, which is mounted in the upper portion of the bicycle, due to its distance from the road face is not likely to become splashed with foreign matter from the road, but is susceptible to rain water or other liquids becoming deposited. On the other hand, an electronic control device mounted in the lower portion of the bicycle will be susceptible to become splashed with foreign matter from the road. When a liquid is deposited on an electronic control device, there is a risk that the liquid will penetrate into the interior through the reset switch operating member, causing an insulation fault in the reset switch, possibly resulting in malfunction. To prevent this, a waterproof construction is required for the reset switch operating member. Deposited solid matter, on the other hand, can harden and clog up the reset switch operating member, with the risk that the reset switch will become difficult to operate.

Accordingly, it is an object of the present invention to provide a bicycle electronic control device having a reset switch, wherein problems resulting from deposits of foreign matter are avoided, without waterproof construction for the reset switch operating member.

The bicycle electronic control device pertaining to the invention herein is a device for electronically controlling on-board control-targeted equipment on the bicycle, comprising a computer portion and a reset portion. The computer portion controls the control-targeted equipment, by means of a predetermined program. The reset portion has a non-contact switch, and resets the computer portion by outputting a reset signal to the computer portion by means of a non-contact operation.

With this electronic control device, a computer portion controls control-targeted equipment by means of a predetermined program. During the control process, if a system error should occur, for example, due to the effects of electromagnetic waves from the outside, the reset portion outputs a reset signal to the computer portion by means of the non-contact switch, thereby resetting the computer portion. Here, since the reset portion has a non-contact switch, a reset signal can be output by the non-contact switch. Accordingly, since the reset switch operating member is eliminated, there is no need for waterproof construction in the reset switch portion, thereby making it difficult for liquids to penetrate inside, and for problems caused by deposited liquid to occur. As regards deposited solid matter, since the reset operation takes place by means of a non-contact operation, problems caused by deposited solid matter are not likely to occur.

The non-contact switch is a reed switch switched on and off by means of magnetic force. The reset switch may be operated by bringing a magnet into proximity with the reed switch.

In a further embodiment of the invention, the computer portion and the reset portion are mounted on a shifter having an electrically powered derailleur, as the control-targeted equipment. In this case, problems caused by deposited solid matter are not likely to occur, even where the electronic control device is mounted on an electrically powered derailleur installed in the lower portion of a bicycle.

In another further embodiment, the electrically powered derailleur is an electrically powered rear derailleur, comprising a base portion mounted on the bicycle and a chain guide portion displaceable with respect to the base portion, with the computer portion and reset portion being mounted on the base portion. In this case, the computer portion and base portion are mounted on the base portion, which is installed on the bicycle and does not move with respect to the bicycle, thereby simplifying the wiring layout and making it easier to produce a waterproof construction.

In another further embodiment, the computer portion and reset portion are mounted on a shifter having an electrically powered internal shift hub, as the control-targeted equipment. Problems caused by deposited solid matter are not likely to occur, even where the electronic control device is mounted on an electrically powered internal shift hub installed in the lower portion of a bicycle.

In another further embodiment, the bicycle electronic control device further comprises an operating signal output portion connected to said computer portion, for outputting to said computer portion an operating signal for operating said control-targeted equipment. In this case, the computer portion operates the control-targeted equipment by means of an operating signal.

In another further embodiment, the operating signal output portion outputs a shift signal as the operating signal to the computer portion. In this case, control-targeted equipment including, for example, a shifter or a display device such as a cycle computer, can be operated by means of an operating signal.

According to the present invention, since the reset portion has a non-contact reed switch, a reset signal can be output by means of a non-contact operation. Accordingly, since no reset switch operating member is required, a waterproof construction is not required for the reset switch operating member, thereby making it difficult for liquids to penetrate, and avoiding problems that could be caused by deposited liquids. Additionally, as the reset operation is a non-contact operation, even in the presence of deposited solid matter, problems caused by deposited solid matter are unlikely to occur.

### Brief Description of the Drawings

- Fig. 1: Side schematic depiction of a bicycle equipped with a bicycle gear shift pertaining to the present invention.
- Fig. 2: Perspective view of the area around the bicycle handlebar.
- Fig. 3: Control block diagram of shift control portion.
- Fig. 4: Side view of external rear gear shift.
- Fig. 5: Control block diagram of electronic control device.
- Fig. 6: Illustration of another embodiment, corresponding to Fig. 1.
- Fig. 7: Illustration of another embodiment, corresponding to Fig. 3.
- Fig. 8: Illustration of another embodiment, corresponding to Fig. 5.

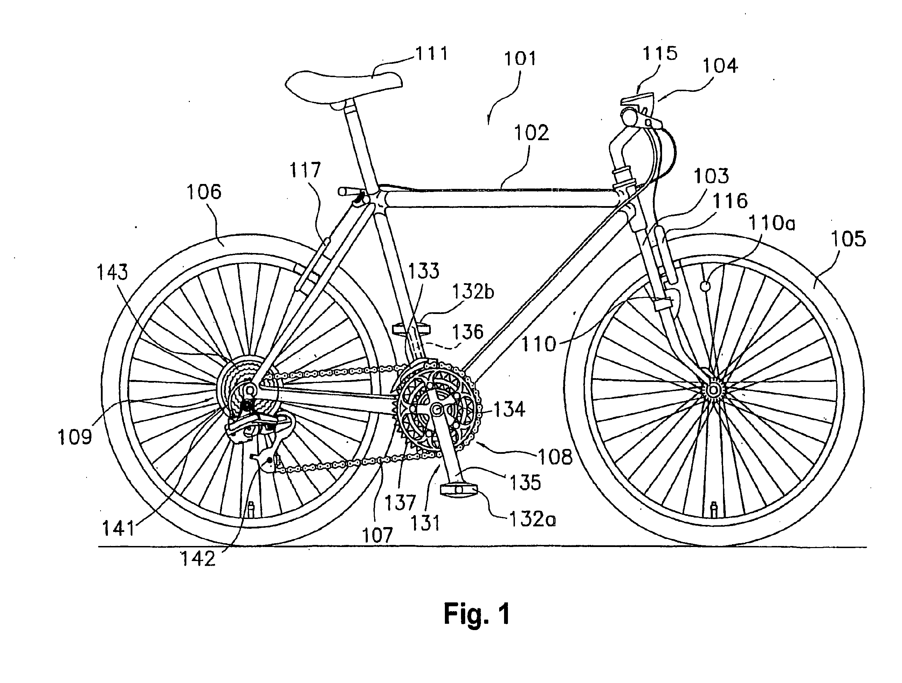

Fig. 1 illustrates a bicycle 101 pertaining to an embodiment of the invention.

Bicycle 101 is a sport bike of mountain bike type, composed principally of a frame 102, front fork 103, handlebar 104, front wheel 105, rear wheel 106, chain 107, external front gear shift 108, and external rear gear shift 109.

Frame 102 serves as the base of the bicycle 101, with the front fork 103 being mounted at the front end thereof, the external front gear shift 108 in the lower center, and the rear wheel 106 and external rear gear shift 109 at the rear end. A saddle 111 for the rider to sit in is disposed in the upper center.

Front fork 103 is swivelably mounted to the front of frame 102, about an inclined axis. Handlebar 104 is attached at the upper end of front fork 103, and front wheel 105 is attached at the lower end. A rotation speed sensor (example of a riding condition sensor portion) 110 for sensing rotation speed (example of a riding condition) of the bicycle wheel is disposed on front wheel 105. Rotation speed sensor 110 has, for example, a reed switch for sensing a magnet 110a affixed to the front wheel 105, and outputs pulses from the reed switch.

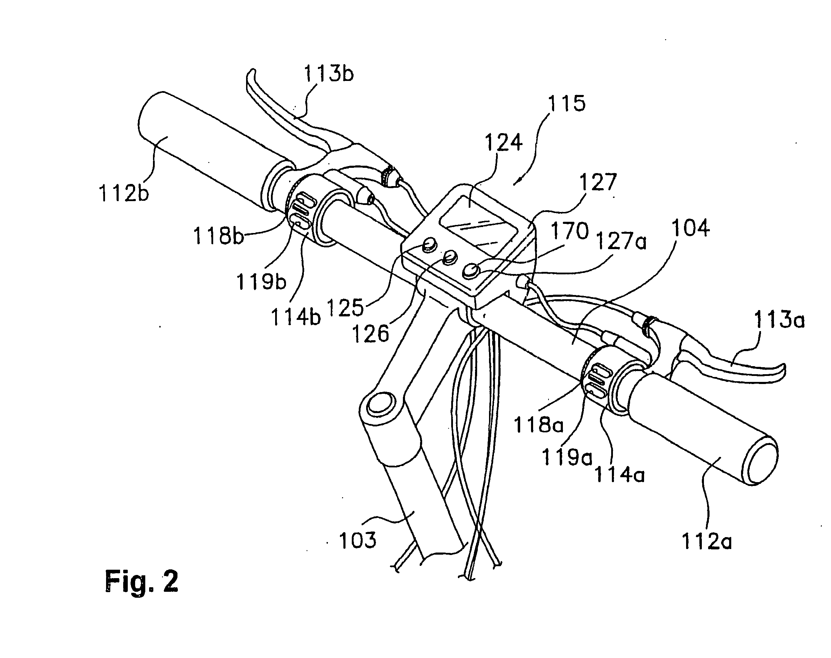

As shown in Fig. 2, a grip 112a, 112b and a brake lever 113a, 113b are disposed at each of the two ends of handlebar 104. Shift controllers 114a, 114b are disposed inwardly from the brake levers 113a, 113b. A shift control portion (example of an operating signal output portion) 115 is mounted in the central portion of handlebar 104; this shift control portion 115 is connected to shift controllers 114a, 114b, external front gear shift 108, and external rear gear shift 109.

Brake levers 113a, 113b perform braking of the front wheel 105 and rear wheel 106, respectively; brake lever 113a is connected to front brake 116, and brake lever 113b is connected to rear brake 117.

Shift controllers 114a, 114b perform shifting of the external front gear shift 108 and external rear gear shift 109 in manual shift mode. On the shift controller 114a shown at right in Fig. 2 are disposed a rear upshift button 118a and a rear downshift button 119a; on the shift controller 114b shown at left in Fig. 2 are disposed a front upshift button 118b and a front downshift button 119b. The upshift buttons 118a, 118b each output a signal for shifting the gear speed (described later) of the external front gear shifts 109, 108 up by one speed (i.e. upshift). Similarly, the downshift buttons 119a, 119b each output a signal for shifting gear speed of the external gear shifts 109, 108 down by one speed (i.e. downshift).

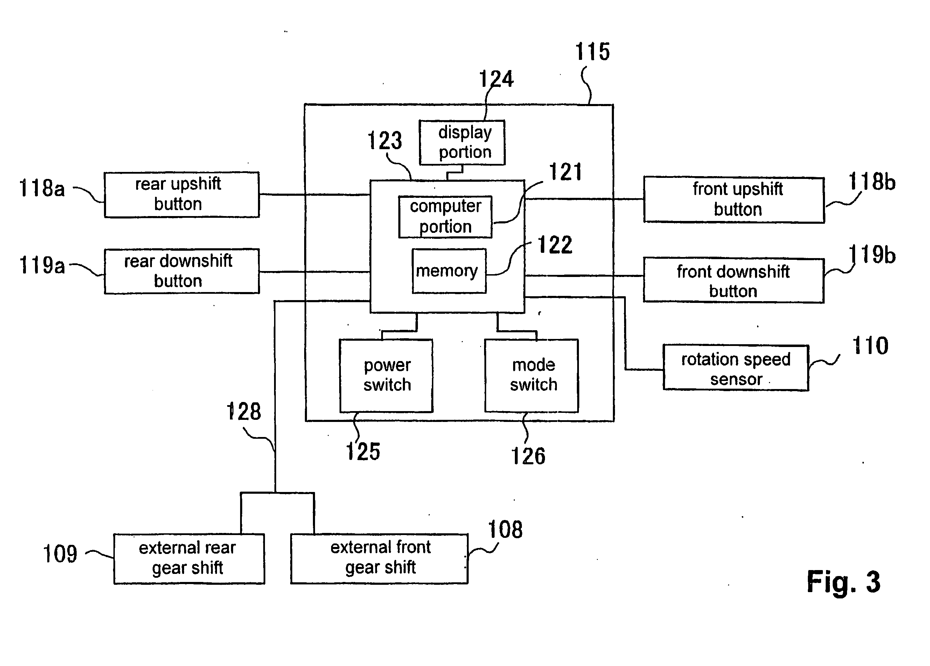

In manual shift mode, in response to signals from shift controllers 114a, 114b shift control portion 115 generates a shift signal. In automatic shift mode, it generates a shift signal for upshifting or downshifting automatically in response to a speed signal from rotation speed sensor 110, and outputs the signal to the external front gear shift 108 and external rear gear shift 109. As shown in Fig. 3, this shift control portion 115 comprises a control portion 123 that includes a CPU 121 and memory 122; a display portion 124 for displaying current gear speed or other information; a power switch 125; and a mode switch 126. Control portion 123 carries out shift control and display control, by means of its CPU 121. To control portion 123 are connected the front and rear up/downshift buttons 118a, 118b, 119a, 119b. Display portion 124 consists, for example, of a segmented liquid crystal display device, and can display current velocity, cumulative distance, shift position, and the like. Accordingly, shift control portion 115 functions as a so-called cycle computer. Power switch 125 switches the display portion 124 on and off. Mode switch 126 is used to switch between automatic shift mode and manual shift mode. Shift control portion 115 is housed within a control case 127 of box configuration, with the display portion 124, power switch 125 and mode switch 126 disposed on the upper face thereof. Shift control portion 115 is connected to external front gear shift 108 and external rear gear shift 109 via wires 128.

As shown in Fig. 1, front wheel 105 is installed with the hub member thereof mounted on the front fork 103, with a front wheel brake 116 for braking the front wheel 105 arranged above it. The rear wheel 106 is mounted on the back end of frame 102, with the external rear gear shift 109 installed on the back end of frame 102 in proximity to the hub member. A rear wheel brake 117 for braking the rear wheel 106 is arranged above it.

Chain 107 extends around the external front gear shift 108 and external rear gear shift 109, and transmits drive force from the external front gear shift 108 to the external rear gear shift 109.

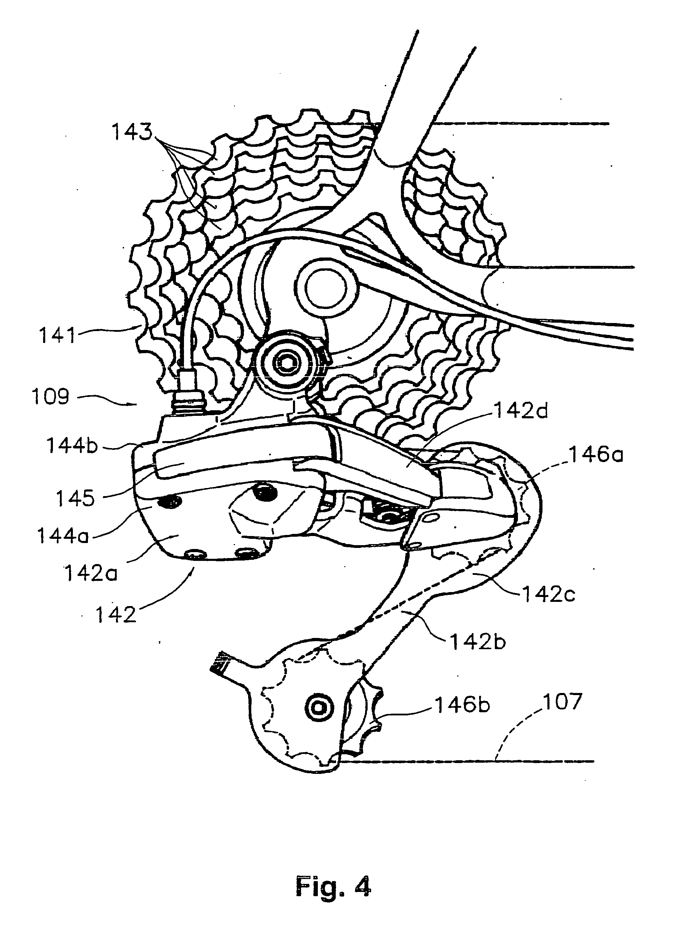

As shown in Fig. 4, the external rear gear shift 109 is mounted in proximity to the hub member of rear wheel 106, and constitutes a mechanism for transmitting to the rear wheel 6 driving force transmitted by chain 107. External rear gear shift 109 is composed of a rear sprocket wheel 141 and a rear derailleur 142.

Rear sprocket wheel 141 is composed of a plurality of sprockets 143 of different size, and is mounted concentrically with respect to the hub axis of the rear wheel 106.

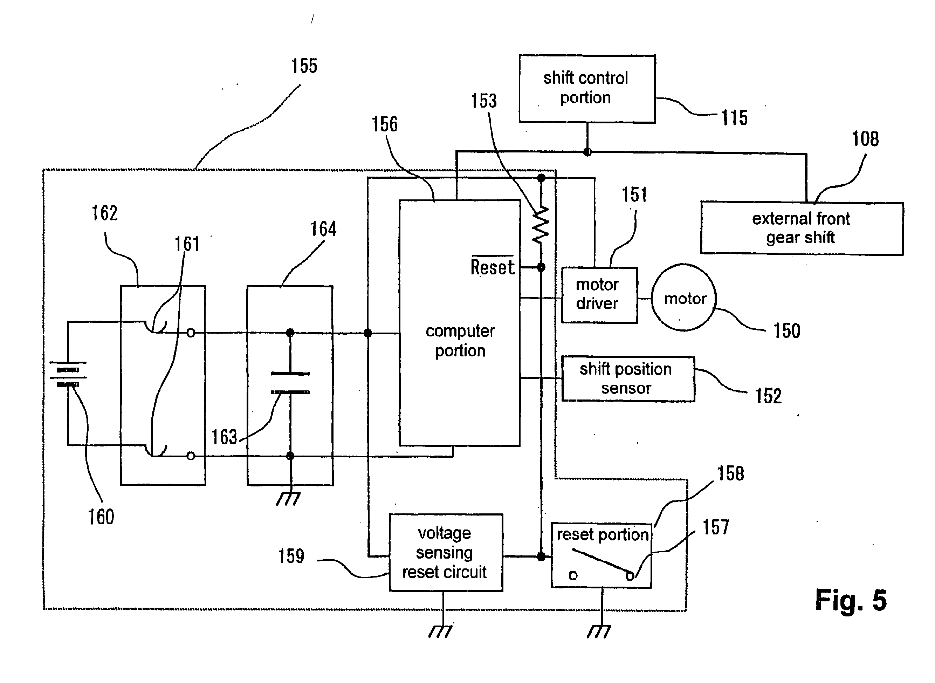

The rear derailleur 142 moves the chain 107 onto one of the plurality of sprockets 143, and has a base portion 142a and a chain guide portion 142b displaceable with respect to the base portion 142a. Through displacement of this chain guide portion 142b the chain 107 is engaged on one of the plurality of sprockets 143. Base portion 142a has a pair of aluminum alloy mounting portions 144a, 144b, and a synthetic resin housing 145 arranged between the mounting portions 144a, 144b. Inside housing 145 is installed a shift motor 150 equipped with a reducer (Fig. 5); rotation of the motor 150 moves the chain guide portion 142b in stepwise fashion towards/away from the rear wheel 106. Also installed within housing 145 is an electronic control device 155 (Fig. 5) for controlling motor 150 in response to a shift signal from shift control portion 115. The chain guide portion 142b has a guide 142c with two pulleys 146a, 146b mounted thereon spaced apart from one another, for guiding the chain 107; and a four-point link mechanism 142d enabling parallel movement of the guide 142 with respect to the base portion 142, in the direction towards/away from the rear sprocket wheel 141. The motor 150 is linked to the four-point link mechanism 142d, whereby the four-point link mechanism 142d swivels through rotation of the motor 150, causing the guide 142c to undergo parallel displacement in response to a shift signal.

As shown in Fig. 5, electronic control device 155 has a computer portion 156 for controlling the motor 150 according to a predetermined program; a reset portion 158 having a reset switch 157, for outputting a reset signal to computer portion 156 by means of a non-contact operation, in order to reset the computer portion 156; and a voltage sensing reset circuit 159 for outputting a reset signal in the event of a power interruption. Computer portion 156 comprises a one-chip microcomputer that includes, for example, a CPU, RAM, ROM, and I/O interface. Shift control portion 115 is connected to the computer portion 156, which controls the motor 150 in response to a shift signal from shift control portion 115. The motor 150 is also connected to computer portion 156, via motor driver 151. Also connected is a shift position sensor 152 for sensing displacement location (shift position) of rear derailleur 142. Computer portion 156 transmits shift position obtained thereby to shift control portion 115.

As the reset switch 157 of reset portion 158, there is used a reed switch switchable on and off by a non-contact operation. The reed switch can be operated on and off by being brought into proximity with magnet. Here, reset switch 157 is a normally open contact that is normally off, and that turns on when a magnet is brought into proximity. One end of reset switch 157 is connected to the reset terminal of computer portion 156; the other end is grounded. Thus, when a magnet is brought into proximity with reset switch 157, reset switch 157 goes on, and a Low reset signal is output to the reset terminal. A voltage sensing reset circuit 159 is also connected to the reset terminal of computer portion 156. Under a predetermined condition, the voltage sensing reset circuit 159 outputs a Low reset signal to the reset terminal of computer portion 156, to reset the computer portion 156.

Electronic control device 155 also has a battery supply 160 as the power supply for computer portion 156 and motor 150; a connector portion 162 having two connectors 161 for connection to battery 160; and a backup portion 164 having a charge storage element 163 parallel-connected with connector portion 162. Charge storage element 163 consists, for example, of a large-capacity capacitor with capacity of about 1000 µF. Power supply voltage is 3 V, for example, with power being supplied from the battery 160 to the computer portion 156 via the backup portion 164. Thus, power is maintained even when the connector portion 162 is momentarily disconnected in order to replace the battery, or due to vibration or the like. The negative terminal of the backup portion 164 is grounded. The positive terminal of the backup portion 164 is connected to the voltage sensing reset circuit 159, to the motor driver 151, and via resistance 153 to the reset terminal of computer portion 156. Voltage sensing reset circuit 159 senses the voltage of the backup portion 164, and outputs a reset signal to computer portion 156 in the event that it falls below predetermined voltage (1.8 V, for example). The reset terminal is normally Hi from the voltage from the power supply.

Here, since the pair of mounting portions 144a, 144b and the housing 145 of the rear derailleur 142 are produced from nonmagnetic material (i.e. aluminum alloy and synthetic resin), they are unaffected by magnetic force when a reed switch is employed as reset switch 157.

As shown in Fig. 1, external front gear shift 108 is mounted in the lower center portion of frame 102, and transmits pedaling force by the rider to the external rear gear shift 109 via chain 107. External front gear shift 108 is composed of a plurality of sprockets 137 of different size, and a front derailleur 133.

The plurality of sprockets 137 are disposed on a gear crank 131. Gear crank 131 is turned by means of pedals 132a, 132b being pedaled by the rider. Gear crank 131 is composed of a crank shaft 134, a right crank 135, and a left crank 136. Crank shaft 134 passes through the lower center portion of frame 102 so as to be rotatable on the horizontal. The right crank 135 is nonrotatably attached to one end of the crank shaft 134, with the plurality of sprockets 137 fixed on right crank 135. Left crank 136 is nonrotatably attached at one end thereof to the left side of crank shaft 134. Pedals 132a, 132b are rotatably mounted on the other, i.e. outside, ends of the right crank 135 and left crank 136, respectively.

Front derailleur 133 moves the chain 107 onto any one of the plurality of sprockets 137, and like the rear derailleur 142 has a base portion and a chain guide portion, not shown; the component is displaceable by means of a electrically powered actuating element such as a shift motor or solenoid. Front derailleur 133 is operated by means of a shift signal sent from shift control portion 115. Front derailleur 133 senses current gear speed by means of a shift position sensor. An electronic control device similar to that installed on base portion 142a of rear derailleur 142 is installed on the base portion of front derailleur 133.

Following is a description of one example of operation of the electronic control device 155 of rear derailleur 142 by means of shift control operation of shift control portion 115.

Once the rider installs a battery as the power supply for shift control portion 115 and electronic control device 155, shift control of the bicycle 101 is enabled. By so doing, the shift control portion 115 and electronic control device 155 are initialized. In manual shift mode, by means of push operation of the rear upshift button 118a and rear downshift button 119a, a shift signal is output by shift control portion 115 to the computer portion 156 of electronic control device 155 to control the motor 150 in order to shift the rear derailleur 142. In automatic shift mode, the shift control portion 115 compares an upshift threshold value and a downshift threshold value with reference to a velocity signal output by rotation speed sensor 110, and generates a shift signal. The shift signal so generated is then output to the computer portion 156 of electronic control device 155, and the motor 150 is controlled in order to shift the rear derailleur 142.

On the other hand, if the computer portion 156 of the electronic control device 155 installed on the rear derailleur 142 has gone out of control due a system error, the magnet is brought into proximity with the reset switch 157, turning the reset switch on to reset the computer portion 156. Assuming that the battery 160 were removed in order to induce reset by the voltage sensing reset circuit 159, where the charge storage element 163 has 1000 µF capacity, power consumption during loss of control is 1 µA, power supply voltage is 3 V, and reset voltage is 1.8 V, it would take approximately 20 minutes for the charge storage element 163 to discharge down to voltage of below 1.8 V, and accordingly it would take approximately 20 minutes for the voltage sensing reset circuit 159 to output a reset signal. Thus, in a system having a backup power supply, reset will not take place quickly, even if the power is interrupted.

In the present invention, however, by bringing a magnet into proximity with the reset switch 157, the reset switch 157 may be switched on by means of a non-contact operation, so that a reset signal may be output instantly to the computer portion 156. Since a reed switch is used as the reset switch 157, a reset signal can be output by means of a non-contact operation. Accordingly, since the reset switch 157 lacks an operating member, there is no need for waterproof construction of the reset switch 157 portion, thereby making it difficult for liquids to penetrate inside, and for problems caused by deposited liquid to occur. As regards deposited solid matter, since the reset operation takes place by means of a non-contact operation, problems caused by deposited solid matter are not likely to occur.

The magnet used for reset operations may be provided, for example, in the form of a key holder to which is attached the key for a bicycle theft prevention device. Alternatively, the magnet for reset operations may be detachably mounted on a component of the bicycle. For example, as shown in Fig. 2, a holder portion 127a for installing a magnet 170 could be disposed on the control case 127 of shift control portion 115. Alternatively, the magnet 110a serving as the sensor target for the rotation speed sensor 110 could be designed to be detachable, allowing the magnet 110a to be used for reset operations.

### Other Embodiments

(a) In the embodiment hereinabove, the invention was described in the context of an example of an electronic control device installed on the derailleur of an external gear shift; however, the invention is applicable to all manner of bicycle electronic control devices having a shift control portion or other computer portion.

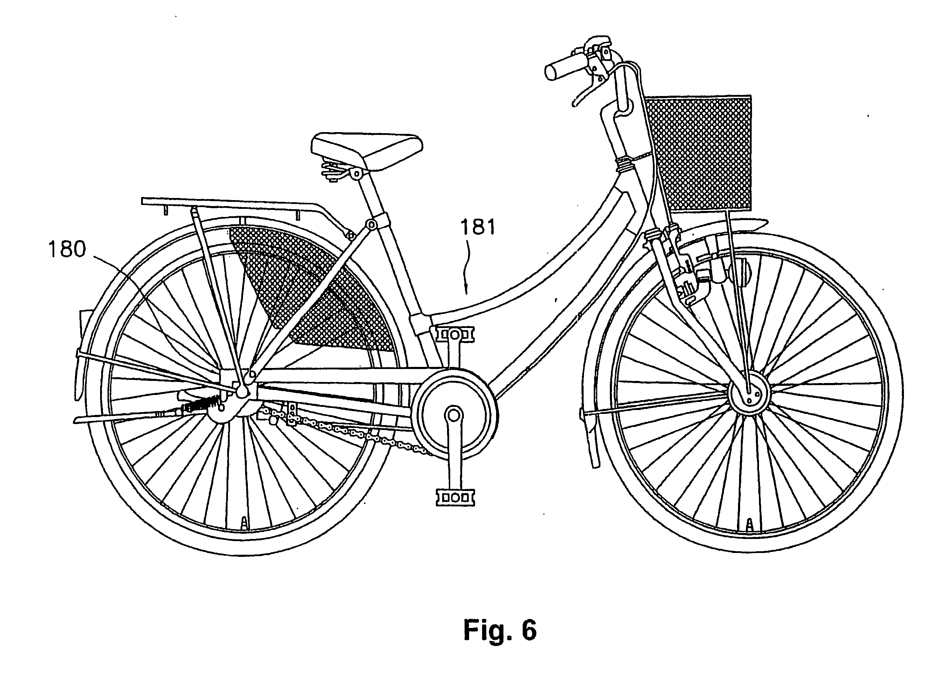

For example, as shown in Fig. 6, the invention could be implemented in an electronic control device installed in the internal shift hub 180 of a bicycle 181 having electrically driven internal shift hub 180. Since the construction of such a bicycle 181 is known in the art, it will not be described here.

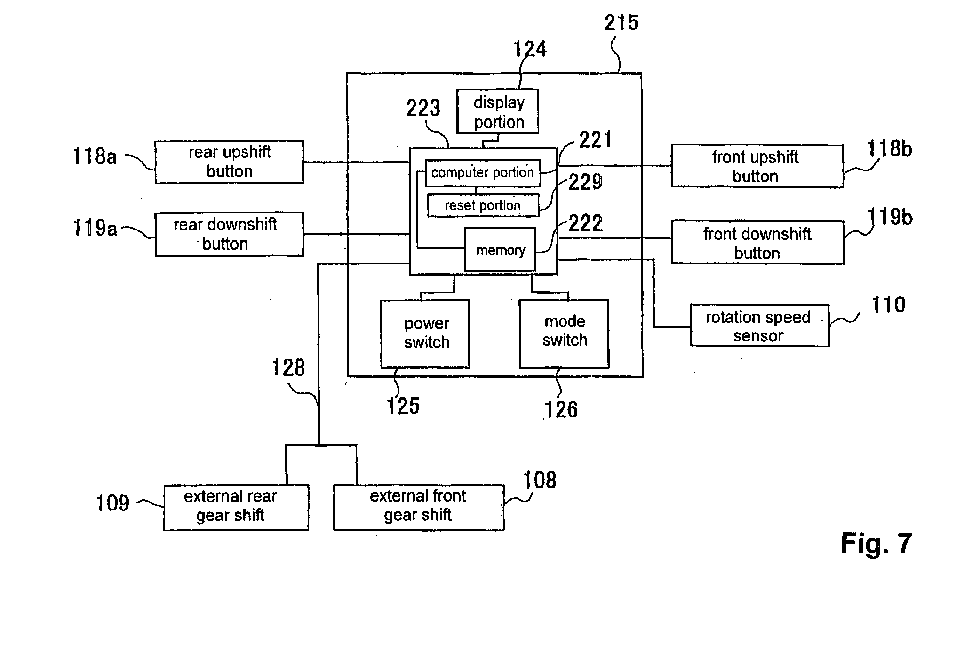

As shown in Fig. 7, the control portion 223 of a shift control portion 215 may be employed as the electronic control device pertaining to the invention; this control portion 223 may be composed of a computer portion 221 that includes a CPU; a reset portion 229; and memory 222. In this case, electronic control devices are not disposed on the external gear shifts 108, 109; rather, motors or other control-targeted equipment for the external gear shifts are controlled directly by control portion 223.

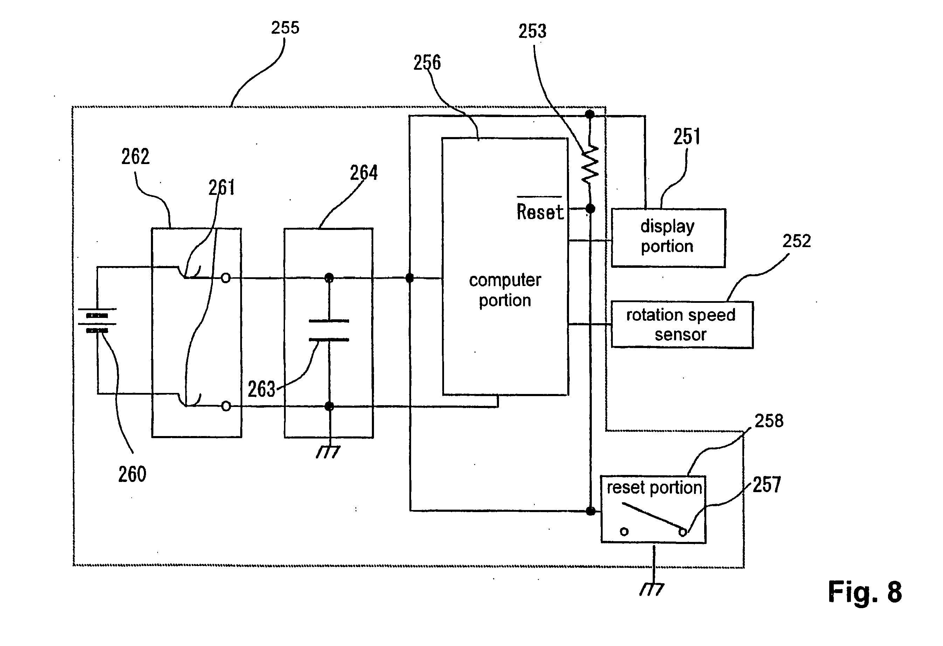

Alternatively, as shown in Fig. 8, a cycle computer 280 for calculating and displaying velocity from rotation speed provided by a rotation speed sensor 252 could be composed of an electronic control device 255 and a display portion 251. Like the electronic control device 155 described previously, electronic control device 255 has a battery 260, connector portion 262, backup portion 264, computer portion 256, and reset portion 258. The cycle computer 280 has a case member of nonmagnetic material (synthetic resin, for example). Such an arrangement is unaffected by magnetic force.

(b) In the embodiment hereinabove, a voltage sensing reset circuit is provided, but is not required; it is possible to reset using the reset switch only.

## Claims

1. A bicycle electronic control device (150) for electronically controlling on-board control-targeted equipment on the bicycle (101, 181),
said bicycle electronic control device (155, 255) comprising
a computer portion (156, 256) for controlling said control-targeted equipment, by means of a predetermined program; and
a reset portion (158, 258) having a non-contact switch (157, 257) , for resetting said computer portion (156, 256) outputting a reset signal to said computer portion (156, 256), by means of a non-contact operation.
whereby the
non-contact switch (157, 257) is a reed switch switched on and off by means of magnetic force.

2. A bicycle electronic control device according to claim 1 wherein said computer portion (156, 256) and said reset portion (158, 258) are mounted on a shifter (108, 109) having an electrically powered derailleur, as said control-targeted equipment.

3. A bicycle electronic control device according to claim 2 wherein said electrically powered derailleur is an electrically powered rear derailleur (142), comprising a base portion (142a) mounted on said bicycle (101) and a chain guide portion (142b) displaceable with respect to said base portion (142a), said computer portion (156) and said reset portion (157) being mounted on said base portion (142a).

4. A bicycle electronic control device according to claim 1 wherein said computer portion (256) and said reset portion (257) are mounted on a shifter (108, 109) having an electrically powered internal shift hub (180), as said control-targeted equipment.

5. A bicycle electronic control device according to any of claims 1 to 4 further comprising an operating signal output portion connected to said computer portion (156, 256), for outputting to said computer portion (156, 256) an operating signal for operating said control-targeted equipment.

6. A bicycle electronic control device according to claim 5 wherein said operating signal output portion outputs a shift signal as said operating signal to said computer portion (156, 256).

## Patentansprüche

1. Elektronische Fahrradsteuervorrichtung (150) zum elektronischen Steuern von am Fahrzeug befindlichen, ein Steuerungsziel darstellenden Geräten am Fahrrad (101, 181),
wobei die elektronische Fahrradsteuervorrichtung (155, 255) aufweist:
ein Computerglied (156, 256), welches die das Ziel der Steuerung darstellende Geräte mittels eines vorbestimmten Programms steuert; und
ein Rücksetzglied (158, 258), das einen kontaktlosen Schalter (157, 257) zum Rücksetzen des Computergliedes (156, 156) aufweist, der mittels einer kontaktlosen Operation ein Rücksetzsignal an das Computerglied (156, 256) ausgibt,
wobei der kontaktlose Schalter (157, 257) ein Reed-Schalter ist, der mittels magnetischer Kraft an- und ausgeschaltet wird.

2. Elektronische Fahrradsteuervorrichtung nach Anspruch 1, bei welcher das Computerglied (156, 256) und das Rücksetzglied (158, 258) an einer Schalteinrichtung (108, 109) montiert sind, die einen elektrisch betriebenen Umwerfer als das das Ziel der Steuerung darstellende Gerät aufweist.

3. Elektronische Fahrradsteuervorrichtung nach Anspruch 2, bei welcher der elektrisch betriebene Umwerfer ein elektrisch betriebener hinterer Umwerfer (142) ist, der einen Basisabschnitt (142a), der am Fahrrad (101) montiert ist, und einen Kettenführungsabschnitt (142b) aufweist, der bezüglich des Basisabschnittes (142a) verschiebbar ist,
wobei das Computerglied (156) und das Rücksetzglied (157) am Basisabschnitt (142a) montiert sind.

4. Elektronische Fahrradsteuervorrichtung nach Anspruch 1, bei welcher das Computerglied (256) und das Rücksetzglied (257) an einer Schalteinrichtung (108, 109) montiert sind, die eine elektrisch betriebene innenliegende Schaltnabe (180) als das das Ziel der Steuerung darstellende Gerät aufweist.

5. Elektronische Fahrradsteuervorrichtung nach einem der Ansprüche 1 bis 4, welche weiter ein Betätigungssignal-Ausgabeglied aufweist, das mit dem Computerglied (156, 256) verbunden ist, um an das Computerglied (156, 256) ein Betätigungssignal zum Betätigen des das Ziel der Steuerung darstellenden Gerätes auszugeben.

6. Elektronische Fahrradsteuervorrichtung nach Anspruch 5, bei welcher das Betätigungssignal-Ausgabeglied ein Schaltsignal als das Betätigungssignal an das Computerglied (156, 256) ausgibt.

## Revendications

1. Dispositif de commande électronique de bicyclette (150) destiné à commander électroniquement un équipement à commande ciblée embarqué sur la bicyclette (101, 181),
ledit dispositif de commande électronique de bicyclette (155, 255) comprenant
une partie d'ordinateur (156, 256) destinée à commander ledit équipement à commande ciblée, à l'aide d'un programme prédéterminé ; et
une partie de réinitialisation (158, 258) possédant un commutateur dépourvu de contact (157, 257), destinée à réinitialiser ladite partie d'ordinateur (156, 256) en transmettant un signal de réinitialisation à ladite partie d'ordinateur (156, 256), à l'aide d'une opération dépourvue de contact,
moyennant quoi le commutateur dépourvu de contact (157, 257) est un commutateur à lames souples activé et désactivé à l'aide d'une force magnétique.

2. Dispositif de commande électronique de bicyclette selon la revendication 1, dans lequel ladite partie d'ordinateur (156, 256) et ladite partie de réinitialisation (158, 258) sont montées sur un sélecteur de vitesses (108, 109) possédant un dérailleur à alimentation électrique, en tant qu'équipement à commande ciblée.

3. Dispositif de commande électronique de bicyclette selon la revendication 2, dans lequel ledit dérailleur à alimentation électrique est un dérailleur arrière à alimentation électrique (142), comprenant une partie de base (142a) montée sur ladite bicyclette (101) et une partie de guide de chaîne (142b) déplaçable par rapport à ladite partie de base (142a),
ladite partie d'ordinateur (156) et ladite partie de réinitialisation (157) étant montées sur ladite partie de base (142a).

4. Dispositif de commande électronique de bicyclette selon la revendication 1, dans lequel ladite partie d'ordinateur (256) et ladite partie de réinitialisation (257) sont montées sur un sélecteur de vitesses (108, 109) possédant un moyeu de changement de vitesses interne à alimentation électrique (180), en tant qu'équipement à commande ciblée.

5. Dispositif de commande électronique de bicyclette selon l'une quelconque des revendications 1 à 4 comprenant en outre une partie de transmission de signal d'exploitation reliée à ladite partie d'ordinateur (156, 256), afin de transmettre à ladite partie d'ordinateur (156, 256) un signal d'exploitation permettant d'actionner ledit équipement à commande ciblée.

6. Dispositif de commande électronique de bicyclette selon la revendication 5, dans lequel ladite partie de transmission de signal d'exploitation transmet un signal de changement de vitesses en tant que signal d'exploitation à ladite partie d'ordinateur (156, 256).
